# EUROPEAN PATENT SPECIFICATION

(11) **EP 2 980 387 B1**
(45) Date of publication and mention of the grant of the patent: **14.03.2018**
(21) Application number: 15746181.5
(22) Date of filing: 30.01.2015
(51) Int. Cl.: F02D 11/10, F02D 29/00, F02D 29/02, F02D 41/02, F02D 41/14

(54) **DRIVE CONTROL DEVICE**
ANTRIEBSSTEUERUNGSVORRICHTUNG
DISPOSITIF DE COMMANDE D'ENTRAÎNEMENT

(30) Priority: 04.02.2014 JP 2014019403
(43) Date of publication of application: 03.02.2016
(73) Proprietor: Suzuki Motor Corporation, Hamamatsu, Shizuoka 432-8611 (JP)
(72) Inventor: SAITO Masatoshi, Hamamatsu-shi Shizuoka 432-8611 (JP); MAEDA Sadaharu, Hamamatsu-shi Shizuoka 432-8611 (JP)
(74) Representative: Henkel, Breuer & Partner
(86) International application number: PCT/JP2015/052730
(87) International publication number: WO 2015/119060

(56) References cited:
- DE-A1- 19 739 567
- DE-A1-102008 000 693
- JP-A- 2001 336 630
- JP-A- 2006 250 133
- JP-A- 2009 127 485
- US-A1- 2007 179 016
- US-A1- 2010 324 798
- US-A1- 2013 045 832

## Description

### Technical Field

The present invention relates to a drive control device. Especially, the present invention relates to a drive control device that is capable of executing a torque reduction control for temporarily reducing an engine torque.

### Background Art

Conventionally, in a gear shift control of an automatic transmission, in order to alleviate the gear shift shocks when the gear shift start is determined, it is known to execute a torque reduction control for reducing an engine torque by adjusting a line pressure or retarding an ignition timing according to a vehicle travelling state or a transmission gear stage (e.g., the following JP 2013-160301A).

DE 102008000693 A1 discloses a drive control scheme for an internal combustion engine which teaches a limitation of the target torque after the end of a transmission control.

### Summary of Invention

### Problems to be Solved by Invention

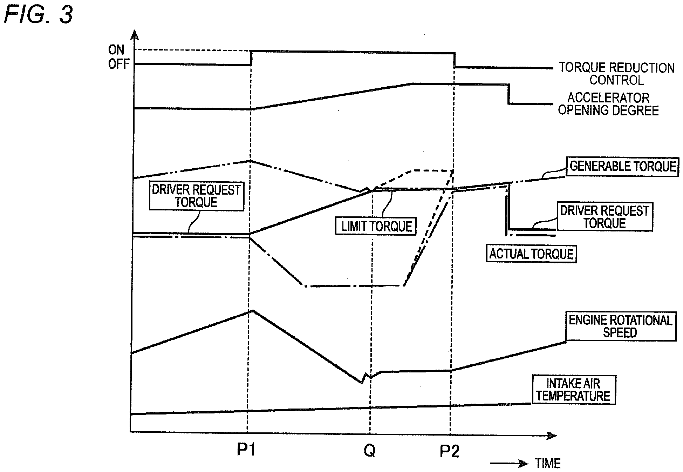

By the way, when executing a gear shift control, for example, a torque reduction control is executed for temporarily reducing the engine torque at the time from a point P1 to a point P2, as shown in Fig. 3.

Further, when ending the gear shift control, a driver request torque that is obtained based on an accelerator opening degree is set as a target torque, and then, a torque limit by the torque reduction control is released.

However, when releasing the torque limit, the target torque (a broken line portion of a driver request torque X shown in Fig. 3) may exceed a generable torque when the accelerator opening degree corresponds to a full opening state or an opening state close thereto. Here, the generable torque refers to a torque that can be actually generated by an engine.

As a result, there is a problem that a driver receives shocks or oscillations due to the deviation between the target torque at the end of the gear shift and the generable torque which is the torque that can be actually generated by the engine.

The present invention aims to execute a torque limit based on a generable torque that can be generated by an engine, during the execution of a torque reduction control.

### Means for solving the problems

The present invention provides a drive control device with the features of claim 1 that is capable of executing a torque reduction control which temporarily reduces an engine torque when executing a gear shift control. A torque limit is executed based on a generable torque when a request torque exceeds the generable torque during the execution of the torque reduction control. The request torque is obtained based on an accelerator opening degree and the generable torque refers to a torque that can be generated by an engine.

### Effects of Invention

According to the present invention, shocks or oscillations at the end of the gear shift control are suppressed, and therefore, it is possible to secure a stable drivability.

### Brief Description of Drawings

[Fig. 1] Fig. 1 is a block diagram of a drive control device.
[Fig. 2] Fig. 2 is a control flow chart of the drive control device.
[Fig. 3] Fig. 3 is a control time chart of the drive control device.

### Embodiment for carrying out Invention

Hereinafter, an embodiment of the present invention will be described in detail with reference to the drawings.

### [Embodiment]

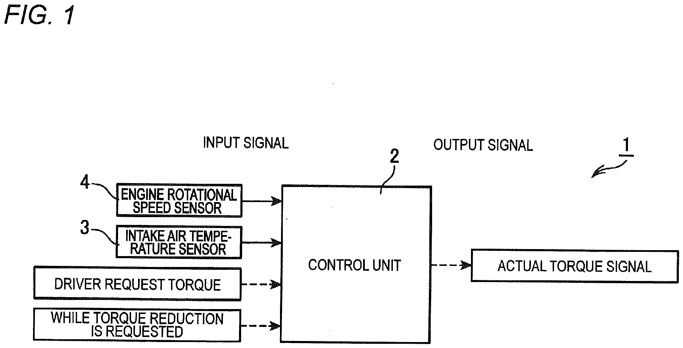

Figs. 1 to 3 show an embodiment of the present invention.

In Fig. 1, a drive control device 1 is a control device that is capable of controlling the driving of a vehicle during the gear shift by AMT (Automated Manual Transmission; not shown) to be mounted on the vehicle.

The drive control device 1 includes a transmission controller (not shown) for controlling the execution of the gear shift control by the automated manual transmission.

Further, the drive control device 1 has a function of executing a torque reduction control for temporarily reducing an engine torque when the gear shift control of the automated manual transmission is executed by the transmission controller. Further, the drive control device 1 has a function of obtaining a torque that can be actually generated by an engine, based on the state of the engine.

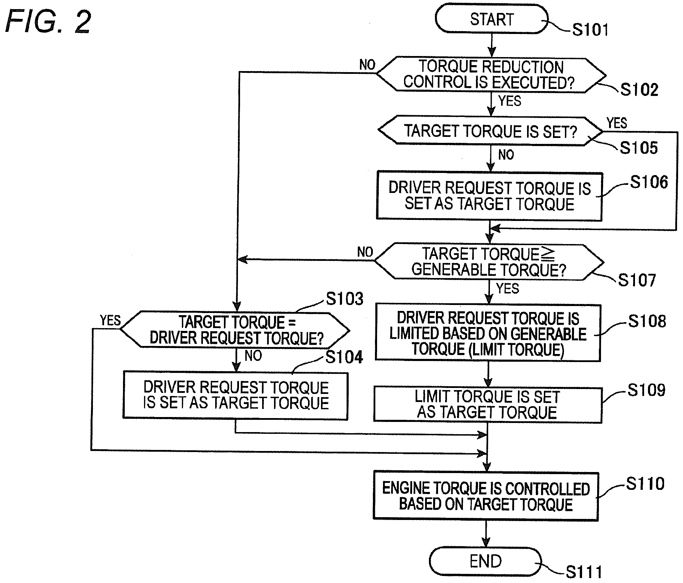

Further, the drive control device 1 includes a control unit 2, as shown in Fig. 2.

Further, the control unit 2 receives a signal (hereinafter, referred to as an intake air temperature) indicative of an intake air temperature of the engine detected by an intake air temperature sensor 3 or a signal (hereinafter, referred to as an engine rotational speed) indicative of an engine rotational speed detected by an engine rotational speed sensor 4.

Further, the control unit 2 receives a signal (hereinafter, referred to as a driver request torque) indicative of a driver request torque obtained based on an accelerator opening degree and a signal (hereinafter, referred to as a torque reduction request signal) indicating that the torque reduction control is being requested.

On the other hand, the control unit 2 outputs a signal (hereinafter, referred to as an actual torque) indicative of an engine torque that is controlled based on a target torque (to be described later).

The control unit 2 has a function of executing the torque reduction control when receiving the torque reduction request signal.

Further, the torque reduction request signal is transmitted from the transmission controller to the control unit 2 during the gear shift control.

Typically, the control unit 2 sets the driver request torque as the target torque. Further, the control unit 2 outputs, as the actual torque, the engine torque controlled based on the target torque.

Further, the control unit 2 can obtain a torque (hereinafter, referred to as a generable torque) that can be actually generated by the engine, based on the intake air temperature and the engine rotational speed.

Further, the control unit 2 is configured to receive the torque reduction request signal. Further, the control unit 2 determines whether or not the target torque is equal to or greater than the generable torque when the torque reduction control is executed based on the torque reduction request signal. When it is determined from the determination result that the target torque is equal to or greater than the generable torque, the control unit 2 sets, as the target torque, a torque (hereinafter, referred to a limit torque) when the driver request torque is limited by the generable torque. Then, the control unit 2 controls the engine torque based on the target torque.

On the other hand, the control unit 2 sets the driver request torque as the target torque when the control unit 2 does not receive the torque reduction request signal. In this case, the control unit 2 does not change the target torque when the driver request torque is set as the target torque.

Further, even in the case where the torque reduction control is being executed, the control unit 2 sets the driver request torque as the target torque when the target torque is less than the generable torque. Also in this case, the control unit does not change the target torque when the driver request torque is set as the target torque.

From the above, the invention according to the present embodiment is characterized in that the limit torque is set as the target torque when the target torque is equal to or greater than the generable torque during the execution of the torque reduction control.

Torque control of the control unit 2 will be described with reference to the flow chart in Fig. 2.

The control unit 2 starts to execute a torque control program when receiving an ON signal of an ignition switch, for example (S101).

The control unit 2 detects whether or not the torque reduction control is being executed (S102).

When it is detected in S102 that the torque reduction control is not being executed, the control unit 2 checks whether or not the driver request torque is set as the target torque (S103). When it is checked in S103 that the driver request torque is not set as the target torque, the control unit 2 sets the driver request torque as the target torque (S104).

On the other hand, when it is detected in S102 that the torque reduction control is being executed, the control unit 2 checks whether or not the target torque is set (S105). When it is checked in S105 that the target torque is not set, the control unit 2 sets the driver request torque as the target torque (S106).

When the driver request torque is set as the target torque in S106 or when the target torque is already set in S105, the control unit 2 determines whether or not the value of the target torque is equal to or greater than the value of the generable torque (S107).

Here, the generable torque refers to a torque that can be actually generated by the engine based on the state of the engine at that time, specifically, an intake air temperature of the engine at that time and a rotational speed of the engine at that time.

When it is determined in S107 that the value of the target torque is not equal to or greater than the value of the generable torque, the control unit 2 checks whether or not the driver request torque is set as the target torque (S103). When it is checked in S103 that the driver request torque is not set as the target torque, the control unit 2 sets the driver request torque as the target torque (S104).

On the other hand, when it is determined in S107 that the value of the target torque is equal to or greater than the value of the generable torque, the control unit 2 executes the torque limit on the driver request torque based on the generable torque (S108).

Here, in the case where the value of the target torque is equal to or greater than the value of the generable torque, this means that the torque requested by a driver is equal to or greater than the generable torque capable of being generated by the engine. Due to such deviation between the driver request torque and the generable torque, the driver may receive uncomfortable feelings such as shocks or oscillations when the execution of the torque reduction control is released.

Subsequently, the control unit 2 sets a limit torque as the target torque (S109). Here, the limit torque refers to a torque when the driver request torque is limited based on the generable torque in S108.

The control unit 2 controls the engine torque based on the target torque checked in S103 or the target torque set in S104 and the target torque set in S109 (S110).

The control unit 2 executes a control such that the engine torque controlled in S110 is outputted as the actual torque, and then, the torque control is ended (S111).

The torque control as described above is repeatedly executed while the control unit 2 is operated.

The torque control of the control unit 2 will be described with reference to the time chart in Fig. 3.

First, the control unit 2 sets the driver request torque as the target torque. Then, the control unit 2 controls the engine torque based on the target torque.

When executing the gear shift control, the control unit 2 executes a torque reduction control for temporarily reducing the engine torque, as in the time from a point P1 to a point P2 in Fig. 3, for example.

Then, during the execution of the torque reduction control, the control unit 2 determines whether or not the driver request torque is equal to or greater than the generable torque which is the maximum value of a torque that can be generated by the engine. In Fig. 3, at a point Q, the driver request torque is equal to or greater than the generable torque.

When it is determined that the driver request torque is equal to or greater than the generable torque, the control unit 2 executes the torque limit on the driver request torque based on the generable torque. Namely, the control unit 2 limits the driver request torque such that the driver request torque is equal to or less than the generable torque.

Then, the control unit 2 sets, as the target torque, the limit torque limited in such a way and then controls the engine torque based on the target torque.

Further, the control unit 2 sets the driver request torque as the target torque when the execution of the torque reduction control is released. Then, the control unit 2 controls the engine torque based on this target torque.

Meanwhile, the transmission controller stops the process of transmitting the torque reduction request signal to the control unit 2 when the gear shift control is ended. Thereby, the control unit 2 does not receive the torque reduction request signal, and therefore, the execution of the torque reduction control is released.

From the above, the control unit 2 of the drive control device 1 can suppress shocks or oscillations at the end of the gear shift control, and therefore, it is possible to secure a stable drivability.

Further, since the shocks or oscillations at the end of the gear shift control are suppressed, damages to the automated manual transmission can be reduced. As a result, a decrease in durability of the automated manual transmission can be prevented.

The present invention is not limited to the above-described embodiments but can be variously modified within the scope of the claims.

For example, technical features of the present invention are not limited in application to the automated manual transmission described above. The technical features of the present invention may be applied to various transmissions where the gear shift control can be automatically executed and the torque reduction control can be executed during the gear shift.

### Reference Numerals

- 1: Drive Control Device
- 2: Control Unit
- 3: Intake Air Temperature Sensor
- 4: Engine Rotational Speed Sensor

## Claims

1. A drive control device (1) capable of executing a torque reduction control which temporarily reduces an engine torque during execution of a gear shift control, the drive control device (1) comprising:
a control unit (2) configured to set a target torque which is used to control the engine torque to a limit torque which is equal to or less than a generable torque when a request torque exceeds the generable torque during the execution of the torque reduction control, and to set the target torque to the request torque when the request torque does not exceed the generable torque during the execution of the torque reduction control, the request torque being obtained based on an accelerator opening degree and the generable torque being a maximum torque that can be generated by an engine during the execution of the torque reduction control.

2. The drive control device (1) according to claim 1, wherein the control unit (2) is configured to obtain the generable torque based on an intake air temperature in the engine and a rotational speed of the engine.

## Patentansprüche

1. Eine Antriebssteuerungsvorrichtung (1), die eine Drehmomentverringerungssteuerung ausführen kann, welche ein Antriebsmaschinendrehmoment während der Ausführung einer Gangschaltsteuerung temporär verringert, wobei die Antriebssteuerungsvorrichtung (1) aufweist:
eine Steuereinheit (2), die konfiguriert ist, um ein Zieldrehmoment, das zur Steuerung des Antriebsmaschinendrehmoments verwendet wird, auf ein Grenzdrehmoment einzustellen, das gleich oder geringer ist als ein erzeugbares Drehmoment, wenn ein Anforderungsdrehmoment das erzeugbare Drehmoment während der Ausführung der Drehmomentverringerungssteuerung übersteigt, und um das Zieldrehmoment auf das Anforderungsdrehmoment einzustellen, wenn das Anforderungsdrehmoment das erzeugbare Drehmoment während der Ausführung der Drehmomentverringerungssteuerung nicht übersteigt, wobei das Anforderungsdrehmoment basierend auf einem Beschleunigeröffnungsgrad erhalten wird und das erzeugbare Drehmoment ein maximales Drehmoment ist, das durch eine Antriebsmaschine während der Ausführung der Drehmomentverringerungssteuerung erzeugt werden kann.

2. Die Antriebssteuerungsvorrichtung (1) gemäß Anspruch 1, wobei die Steuereinheit (2) konfiguriert ist, um das erzeugbare Drehmoment auf Basis einer Einlasslufttemperatur in der Antriebsmaschine und einer Rotationsgeschwindigkeit der Antriebsmaschine zu erhalten.

## Revendications

1. Dispositif (1) de commande d'entraînement apte à exécuter une commande de réduction de couple, qui réduit temporairement un couple de moteur pendant l'exécution d'une commande de changement de vitesse, le dispositif (1) de commande d'entraînement comprenant :
une unité (2) de commande configurée pour fixer un couple cible, qui est utilisée pour commander le couple du moteur à un couple limite inférieur ou égal à un couple pouvant être produit lorsqu'un couple demandé dépasse le couple pouvant être produit pendant l'exécution de la commande de réduction de couple et pour fixer le couple cible au couple demandé lorsque le couple demandé ne dépasse pas le couple pouvant être produit pendant l'exécution de la commande de réduction de couple, le couple demandé étant obtenu sur la base d'un degré d'ouverture d'un accélérateur et le couple pouvant être produit étant un couple maximum, qui peut être produit par un moteur pendant l'exécution de la commande de réduction du couple.

2. Dispositif (1) de commande d'entraînement suivant la revendication 1, dans lequel l'unité (2) de commande est configurée pour obtenir le couple pouvant être produit sur la base d'une température de l'air d'admission dans le moteur et d'une vitesse de rotation du moteur.
